# EUROPEAN PATENT SPECIFICATION

(11) **EP 1 891 349 B1**
(45) Date of publication and mention of the grant of the patent: **05.03.2014**
(21) Application number: 06752802.6
(22) Date of filing: 13.06.2006
(51) Int. Cl.: F16D 27/14, B23P 15/14, B21H 1/00, B23P 19/02, F16H 55/36, H02K 49/00, F16D 13/76, B21H 1/04, F16D 27/112, H02K 1/22, H02K 49/04

(54) **PULLEY ASSEMBLY FOR AN ELECTROMAGNETIC POWER TRANSMITTING ASSEMBLY**
SCHEIBENANORDNUNG FÜR EINE ANORDNUNG ZUR ÜBERTRAGUNG ELEKTROMAGNETISCHER ENERGIE
ASSEMBLAGE DE POULIE POUR UN ASSEMBLAGE DE TRANSMISSION DE PUISSANCE ELECTROMAGNETIQUE

(30) Priority: 13.06.2005 US 689852 P
(43) Date of publication of application: 27.02.2008
(73) Proprietor: Magna Powertrain Inc., Concord, Ontario L4K 4J5 (CA)
(72) Inventor: OSTROWSKI, Ryszard, Mississauga, Ontario L4W 2G8 (CA)
(74) Representative: Grünecker, Kinkeldey, Stockmair & Schwanhäusser
(86) International application number: PCT/CA2006/000970
(87) International publication number: WO 2006/133552

(56) References cited:
- JP-A- 08 068 455
- JP-A- 63 297 827
- JP-A- 2005 180 474
- JP-U- 55 036 752
- JP-U- 60 184 438
- KR-A- 2004 035 184
- US-A- 4 069 572
- US-A- 5 642 797
- US-A- 6 041 490

## Description

### Field of the Invention

This invention relates to a pulley assembly for an electromagnetic power transmitting assembly. In particular, this invention relates to a pulley having a flux carrier wherein the pulley can be sized to meet various engine configurations while maintaining a configuration for effective transfer of magnetic forces.

### Background of the Invention

On an automotive engine, it is common to provide an air conditioning compressor that is selectively driven by a serpentine accessory drive belt. The compressor can be provided with an electromagnetic coupling that selectively couples the drive to the compressor. The electromagnetic coupling is energized to engage and drive the compressor.

U.S. Patent No. 5,667,050 discloses an example of a conventional electromagnetic power transmitting assembly. The assembly of the '050 patent has a pulley structure that rotates on a ball bearing assembly about the input shaft of the compressor. The power transmitting assembly also has a magnetic coil that generates a field of magnetic flux when energized by electric supplied from clutch controller.

In order to increase or decrease the diameter of pulley structure in the type of electromagnetic coupling apparatus disclosed in the '050 patent, there are several methods that can be used. The procedure of increasing the diameter of the pulley structure by a relatively small increment usual includes the addition of material to the pulley outer periphery. Additional thickness of the material is limited by the formability of the steel and initial thickness of the material used to produce the pulley.

Furthermore, if the pulley outer diameter must be increased by a large increment beyond the limits of the thickness range of the pulley outer annular portion, there are several methods that can be used. One method increases the diameter of both the pulley outer periphery as well as the coil cavity. Using this method the coil housing outside diameter must be proportionally increased with inside diameter of pulley coil cavity.

Another option to increase the diameter of the pulley's outer periphery by large increments is to attach an annular flux carrier comprising straight wall sections to a flange, said flux carrier being spaced apart from an inner surface of the outer rim of the pulley, such as disclosed in JP 08 068455 A and JP 63 237827 A.

Another option to increase the diameter of the pulley outer periphery by large increment is to add an annular flux carrier ring-shaped or with a U-shaped cross section and then attached to the pulley structure by welding, as described in U.S. Patent no. 4,935,713 and in JP 55 036752 U, respectively.

Another method of increasing the diameter of the pulley is described in U.S. Patent No. 5,445,256. This method involves the forming of magnetic flux frame into a U- shape and attaching flux frame to the pulley by laser or electron-beam welding.

U.S. Patent No. 3,455,421 discloses an arrangement wherein a U-shaped metal member is attached to the rear face of the coil.

U.S. Patent No. 6,394,252 discloses flux carrier mounted to the compressor housing. This arrangement allows different pulley assemblies to be mounted on a single sized magnetic coil. However, this arrangement requires the compressor manufacturer to reconfigure the flux carrier if other pulleys are to be utilized.

All methods of attachment of the flux carrier to the pulley constriction of pulley to the flux carrier are achieved by welding process to fuse metal components of pulley assembly. The above-mentioned problems of the prior art are solved with the pulley assembly according to claim 1 and with the related method of forming a pulley assembly according to claim 5.

### Summary of the Invention.

There exists a need for an improved pulley assembly in which a magnetic carrier or flux ring is nested within a pulley cavity, which magnetic carrier may be configured to fit various diameter pulleys while maintaining a desired fit with an electromagnetic coupling. The pulley assembly provides a simple method of providing different sized pulleys for a compressor, enabling different sized engines to utilize a common compressor.

According to one aspect of the invention there is provided a pulley assembly comprising a pulley having cavity defined by a central hub and an outer rim having poly v configuration. A flux ring is press fitted within the cavity and optionally staked to permanently retain the flux ring in the cavity. The flux ring has an inner diameter that is sized to closely encircle a magnetic coil and an outer diameter that is sized to be press fitted within the cavity. The inner diameter is constrained at a first portion of the flux ring and the outer diameter is constrained at a second portion of the flux ring enabling the flux ring to have a stepped configuration.

According to another aspect of the invention, there is provided a method of forming a pulley assembly. The method comprises the steps of:
roll forming a pulley having a hub, an outer rim and a flange joining said hub and outer rim, the outer rim, flange and hub defining a cavity;
forming a flux ring having a first portion having an inner diameter and a second portion having an outer diameter, the outer diameter is sized to be press fitted within the cavity of the pulley and the inner diameter is sized to closely encircle an electromagnetic coil; and
press fitting the flux ring within the cavity of the pulley, with the outer diameter of the second portion press fitted against an inner surface of the outer rim.

### Description of the Drawing

In a drawing which illustrates an embodiment of the present invention,

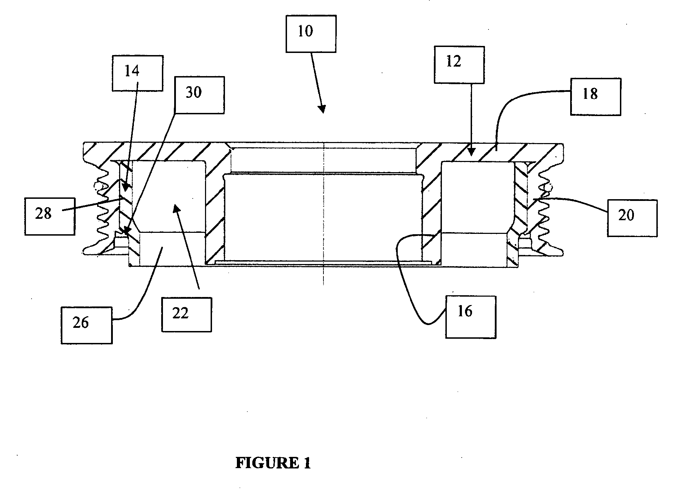

Figure 1 is sectional view of the pulley assembly of the present invention.

### Description of the Invention

The pulley assembly 10 of the present invention is generally illustrated in Figure 1. The pulley assembly comprises a cupped shaped pulley 12 and an annular flux ring 14.

Pulley 12 is conventionally made utilizing a roll forming process as described in U.S. Patent no. 4,273,547. The pulley 12 integrally has an inner hub 16, a web 18 and an outer rim 20, which defines a cavity 22.

The outer diameter of the pulley 12 is determined by the engine specifications and the engine manufacturer. The outer diameter of the hub 16 is determined by the supplier of the air conditioning compressor.

In order for the supplier of the air conditioner compressor to minimize the number of parts required for various engines, the air conditioner supplier requires a uniform hub size. As the outer diameter of the outer rim 20 of pulley 12 increases, the pulley cavity 22 increases. A problem arises in prior art pulley assemblies that the electromagnetic coil positioned within the cavity does not generate a sufficient flux field to engage sufficiently the electromagnetic clutch. A gap is created between inner surface of outer rim 20 and the electromagnetic coil positioned within the cavity 22. The greater the gap, the less effective the electromagnetic clutch is able to provide coupling. The air conditioner supplier is forced to increase the outer diameter of the coil to close the gap, requiring a greater number of coil sizes that must be kept in inventory.

This problem is resolved by the present invention by providing flux ring 14. Flux ring 14 is annular in shape having a first portion 26 and a second portion 28. The first portion 26 has an inner diameter that closely encircles the electromagnetic coil. A desirable gap is about 0.3 to 0.6 mm.

The second portion 28 has an outside diameter that is sized to be press fitted within the cavity 22, on the inside surface of the outer rim 20. Optionally, the outer rim 20 may be staked at circumferentially spaced locations 30 to permanently retain the flux ring 14 within the pulley 12.

The constraining dimensions of the flux ring 14 are the inside diameter of the first portion 26 and the outside diameter of the second portion 28. According to the invention, the flux ring 14 has a stepped configuration. The transition of the annular ring diameters from the first portion 26 to the second portion 28 is selected to maximize field strength of the magnetic flux from the coil assembly to the flux ring 14.

Preferably, flux ring 14 is stamped from low carbon sheet steel, preferably 1008 to 1010 carbon steel. A ring is formed from the sheet steel. The outside diameter of the ring corresponds to the press fit diameter of the second portion 28. A portion of the ring is then reduced in diameter by press forming to form the first portion 26 so that the inside diameter closely conforms to the outside diameter of the electromagnetic coil.

Material thickness of the flux ring 14 must be sufficient to transfer magnetic fluxes from the electromagnetic coil to the pulley engagement face without losses of the flux density and consequently no losses in magnetic attractive force between clutch engagement friction faces.

As is now apparent to those skilled in the art, the pulley 10 of the present invention could easily be reconfigured to provide a larger or smaller outside diameter depending on the engine design requirements without reconfiguring the electromagnetic coil and/or the compressor housing. Additionally, the same compressor could be utilized on several different sized engines merely by adjusting the outside diameter of pulley 10.

The above-described embodiment of the invention is intended to be an example of the present invention and alterations and modifications may be effected thereto, by those of skill in the art, without departing from the scope of the invention which is defined solely by the claims appended hereto.

## Claims

1. A pulley assembly (10) comprising:
a pulley (12) integrally having a hub (16), an outer rim (20) and a flange (18) joining said hub (16) and outer rim (20), said pulley (12) having a cavity (22) defined by said outer rim (20), flange (18) and hub (16); and
a flux ring (14) having an inner diameter sized to closely encircle an electromagnetic coil,
said flux ring (14) is press fitted to said pulley (12) within said outer rim (20), **characterized in that** said flux ring (14) has a stepped configuration having a first portion (26) having said inner diameter and a second portion (28) having an outer diameter sized to engage with an inner surface of said outer rim (20).

2. A pulley assembly as set forth in claim 1, wherein said flux ring (14) and said pulley (12) are staked together.

3. A pulley assembly as set forth in claim 2, wherein said flux ring (14) is low carbon steel.

4. A pulley assembly as set forth in claim 3, wherein said flux ring (14) is formed from a sheet.

5. A method of forming a pulley assembly (10) comprising the steps of:
roll forming a pulley (12) having a hub (16), an outer rim (20) and a flange (18) joining said hub (16) and outer rim (20), said outer rim (20), flange (18) and hub (16) defining a cavity (22);
forming a flux ring (14) having an inner diameter and an outer diameter, said inner diameter sized to closely encircle an electromagnetic coil and said outer diameter sized to be press fitted within said outer rim (20);
**characterized by**
press fitting said flux ring (14) with said outer rim (20) of said pulley (12), wherein said flux ring (14) has a stepped configuration that is formed by stamping a sheet into a tube having said outside diameter and then press forming a first portion (26) of said tube to have said inside diameter.

6. A method as set forth in claim 5, wherein said method further comprises a step of staking said flux ring (14) to said pulley (12).

7. A method as set forth in claim 5, wherein said outer diameter is press fitted against an inner surface of said outer rim (20).

8. A method as set forth in claim 7, wherein said flux ring (14) is formed from a low carbon steel base stock.

## Patentansprüche

1. Riemenscheiben-Anordnung (10), aufweisend:
eine Riemenscheibe (12) mit integral ausgebildeter Nabe (16), einer äußeren Umrandung (20) und einen Flansch (18), welcher die Nabe (16) und die äußere Umrandung (20) miteinander verbindet, wobei die Riemenscheibe (12) einen Hohlraum (22) aufweist, welcher von der äußeren Umrandung (20), dem Flansch (18) und der Nabe (16) bestimmt wird; und
einen Flussring (14) mit einem Innendurchmesser, welcher so bemessen ist, dass dieser eine elektromagnetische Spule eng umgibt,
wobei der Flussring (14) innerhalb der äußeren Umrandung (20) über eine Presspassung an die Riemenscheibe (12) gepresst ist,
**dadurch gekennzeichnet, dass**
der Flussring (14) eine stufenförmige Gestaltung mit einem ersten Abschnitt (26), welcher den Innendurchmesser aufweist, und einen zweiten Abschnitt (28), welcher einen Außendurchmesser aufweist, hat, wobei der Außendurchmesser so bemessen ist, dass dieser mit einer Innenfläche der äußeren Umrandung (20) in Eingriff gelangt.

2. Riemenscheiben-Anordnung nach Anspruch 1, wobei der Flussring (14) und die Riemenscheibe (12) miteinander zusammengesteckt sind.

3. Riemenscheiben-Anordnung nach Anspruch 2, wobei der Flussring (14) aus kohlenstoffarmem Stahl ist.

4. Riemenscheiben-Anordnung nach Anspruch 3, wobei der Flussring (14) aus einem Blech geformt ist.

5. Verfahren zum Formen einer Riemenscheiben-Anordnung (10), beinhaltend die Schritte:
Rollformen einer Riemenscheibe (12), welche eine Nabe (16), eine äußere Umrandung (20) und einen Flansch (18), welcher die Nabe (16) und die äußere Umrandung (20) miteinander verbindet, hat, wobei die äußere Umrandung (20), der Flansch (18) und die Nabe (16) einen Hohlraum bestimmen;
Formen eines Flussrings (14) mit einem Innendurchmesser und einem Außendurchmesser, wobei der Innendurchmesser so bemessen ist, dass dieser eine elektromagnetische Spule eng umgibt, und wobei der Außendurchmesser so bemessen ist, dass dieser über eine Presspassung in die äußere Umrandung (20) einpressbar ist;
**dadurch gekennzeichnet, dass**
der Flussring (14) über eine Presspassung mit der äußeren Umrandung (20) der Riemenscheibe (12) verpresst wird, wobei der Flussring (14) eine stufenförmige Gestaltung aufweist, welche dadurch gebildet wird, dass ein Blech in ein Rohr mit dem Außendurchmesser eingedrückt wird und anschließendem Formpressen eines ersten Abschnitts (26) dieses Rohrs, so dass dieser den Innendurchmesser aufweist.

6. Verfahren nach Anspruch 5, wobei das Verfahren desweiteren einen Schritt aufweist, bei dem der Flussring (14) mit der Riemenscheibe (12) zusammengesteckt wird.

7. Verfahren nach Anspruch 5, wobei der Außendurchmesser über eine Presspassung gegen eine Innenfläche der äußeren Umrandung (20) gepresst wird.

8. Verfahren nach Anspruch 7, wobei der Flussring (14) aus einem kohlenstoffarmen Ausgangsstoff geformt ist.

## Revendications

1. Assemblage de poulie (10) comprenant :
une poulie (12) à laquelle sont intégrés un moyeu (16), une jante extérieure (20) et une joue (18) reliant ledit moyeu (16) et ladite jante extérieure (20), ladite poulie (12) comportant une cavité (22) définie par ladite jante extérieure (20), ladite joue (18) et ledit moyeu (16) ; et
une bague magnétique (14) ayant un diamètre intérieur dimensionné pour encercler étroitement une bobine électromagnétique,
ladite bague magnétique (14) étant adaptée par pression à ladite poulie (12) à l'intérieur de ladite jante extérieure (20),
**caractérisé en ce que**
ladite bague magnétique (14) possède une configuration échelonnée comportant une première partie (26) ayant ledit diamètre intérieur et une seconde partie (28) ayant un diamètre extérieur dimensionné pour venir en prise avec la surface intérieure de ladite jante extérieure (20).

2. Assemblage de poulie selon la revendication 1, dans lequel ladite bague magnétique (14) et ladite poulie (12) sont empilées l'une sur l'autre.

3. Assemblage de poulie selon la revendication 2, dans lequel ladite bague magnétique (14) est en acier à faible teneur en carbone.

4. Assemblage de poulie selon la revendication 3, dans lequel ladite bague magnétique (14) est formée à partir d'une tôle.

5. Procédé de réalisation d'un assemblage de poulie (10) comprenant les étapes consistant à :
former par laminage une poulie (12) comportant un moyeu (16), une jante extérieure (20) et une joue (18) reliant ledit moyeu (16) et ladite jante extérieure (20), ladite jante extérieure (20), ladite joue (18) et ledit moyeu (16) définissant une cavité (22) ;
former une bague magnétique (14) ayant un diamètre intérieur et un diamètre extérieur, ledit diamètre intérieur étant dimensionné pour encercler étroitement une bobine électromagnétique, et ledit diamètre extérieur étant dimensionné pour être adapté par pression à l'intérieur de ladite jante extérieure (20),
**caractérisé par**
l'adaptation par pression de ladite bague magnétique (14) à ladite jante extérieure (20) de ladite poulie (12), dans lequel ladite bague magnétique (14) possède une configuration échelonnée formée par emboutissage d'une tôle en un tube ayant ledit diamètre extérieur, puis formage par pression d'une première partie (26) dudit tube pour avoir ledit diamètre intérieur.

6. Procédé selon la revendication 5, dans lequel ledit procédé comprend en outre une étape d'empilement de ladite bague magnétique (14) sur ladite poulie (12).

7. Procédé selon la revendication 5, dans lequel ledit diamètre extérieur est adapté par pression contre la surface intérieure de ladite jante extérieure (20).

8. Procédé selon la revendication 7, dans lequel ladite bague magnétique (14) est formée à partir d'un acier à faible teneur en carbone.
